(19) **Europäisches Patentamt**

**European Patent Office**

**Office européen des brevets**

(11) **EP 1 069 989 B1**

(12) **EUROPÄISCHE PATENTSCHRIFT**

(45) Veröffentlichungstag und Bekanntmachung des Hinweises auf die Patenterteilung:
**19.12.2001 Patentblatt 2001/51**

(51) Int Cl.⁷: **B41C 1/045**, H04N 1/52, G06T 3/40

(21) Anmeldenummer: **99924733.1**

(22) Anmeldetag: **31.03.1999**

(86) Internationale Anmeldenummer:
**PCT/DE99/00971**

(87) Internationale Veröffentlichungsnummer:
**WO 99/51437 (14.10.1999 Gazette 1999/41)**

(54) **VERFAHREN ZUR GRAVUR VON DRUCKFORMEN**

METHOD FOR ENGRAVING PRINTING FORMS

PROCEDE DE GRAVURE DE FORMES D'IMPRESSION

(84) Benannte Vertragsstaaten:
**BE DE ES FR GB IT NL**

(30) Priorität: **04.04.1998 DE 19815165**

(43) Veröffentlichungstag der Anmeldung:
**24.01.2001 Patentblatt 2001/04**

(73) Patentinhaber: **Heidelberger Druckmaschinen Aktiengesellschaft**
**69115 Heidelberg (DE)**

(72) Erfinder: **DÖLVES, Jürgen, Heinrich, Fritz**
**D-24226 Heikendorf (DE)**

(56) Entgegenhaltungen:
DE-A- 2 208 658       US-A- 4 127 870
US-A- 4 680 625       US-A- 5 492 057

## Beschreibung

Die Erfindung bezieht sich auf das Gebiet der elektronischen Reproduktionstechnik und betrifft ein Verfahren zur Gravur von gerasterten Druckzylindern für den Tiefdruck mit einer elektronischen Graviermaschine. Bei der Gravur von Druckzylindern in einer elektronischen Graviermaschine bewegt sich ein Gravierorgan mit einem Gravierstichel als Schneidwerkzeug in axialer Richtung an einem rotierenden Druckzylinder entlang. Der von einem Graviersteuersignal gesteuerte Gravierstichel schneidet eine Folge von in einem Gravurraster angeordneten Näpfchen unterschiedlicher Tiefe in die Mantelfläche des Druckzylinders. Das Graviersteuersignal wird durch Überlagerung eines Bildsignals, welches die zu gravierenden Tonwerte zwischen "Licht" (Weiß) und "Tiefe" (Schwarz) repräsentiert, mit einem periodischen Rastersignal gebildet. Während das periodische Rastersignal eine vibrierende Hubbewegung des Gravierstichels zur Erzeugung des Gravurrasters bewirkt, bestimmen die Bildsignalwerte die Tiefen der in die Mantelfläche des Druckzylinders gravierten Näpfchen und damit die gravierten Tonwerte.

Für den Mehrfarbendruck, beispielsweise den Vierfarbendruck werden vier gerasterte Druckformen für die vier Druckfarben "Gelb", "Magenta", "Cyan" und "Schwarz" eines Farbsatzes graviert und die mit den einzelnen Druckfarben eingefärbten Druckzylinder in der Tiedruckmaschine übereinander gedruckt.

Beim Mehrfarbendruck mit für alle Farbauszüge gleichen Gravurrastern würden die Rasterpunkte der verschiedenen Druckfarben infolge der unvermeidlichen kleinen Registerfehler einmal aufeinander, ein anderes mal nebeneinander gedruckt werden, was im Druckbild zu einer unerwünschten Veränderung des Farbeindrucks, mit Farbspiel bezeichnet, führen würde. Deshalb werden die vier Druckformen eines Farbsatzes mit Gravurrastern unterschiedlicher Rasterwinkel und/oder Rasterweiten graviert, die derart gewählt sind, daß die beim Übereinanderdruck der Druckformen entstehenden Moire-Muster möglichst kleine Perioden haben und so vom menschlichen Auge nicht mehr als störend wahrgenommen werden.In der Praxis stehen nicht ausreichend viele geeignete Rasterwinkel zur Verfügung wie sie zu einer idealen Moiré-Unterdrückung erforderlich wären. Unterschiede in der Lage der Gravurraster der einzelnen Druckfarben eines Farbsatzes zueinander können daher im Druckbild bei bestimmten Tonwerten dennoch ein störendes Streifenmoiré verursachen.

Aufgabe der vorliegenden Erfindung ist es daher, ein Verfahren zur Gravur von gerasterten Druckzylindern für den Tiefdruck mit einer elektronischen Graviermaschine derart zu verbessern, daß beim Mehrfarbendruck störende Musterbildungen wie Streifenmoirés minimiert werden.

Diese Aufgabe wird durch die Merkmale des Anspruchs 1 gelöst.

Vorteilhafte Weiterbildungen und Ausgestaltungen sind in den Unteransprüchen angegeben.

Die Erfindung wird nachfolgend anhand der Fig. 1 bis 4 näher erläutert.

Es zeigen:

Fig. 1     ein prinzipielles Blockschaltbild einer Graviermaschine für Druckzylinder,

Fig. 2     ein versetztes Gravurraster,

Fig. 3     eine Darstellung zur Erläuterung des Startvektors und

Fig. 4     eine graphische Darstellung zur Erläuterung der Interpolation.

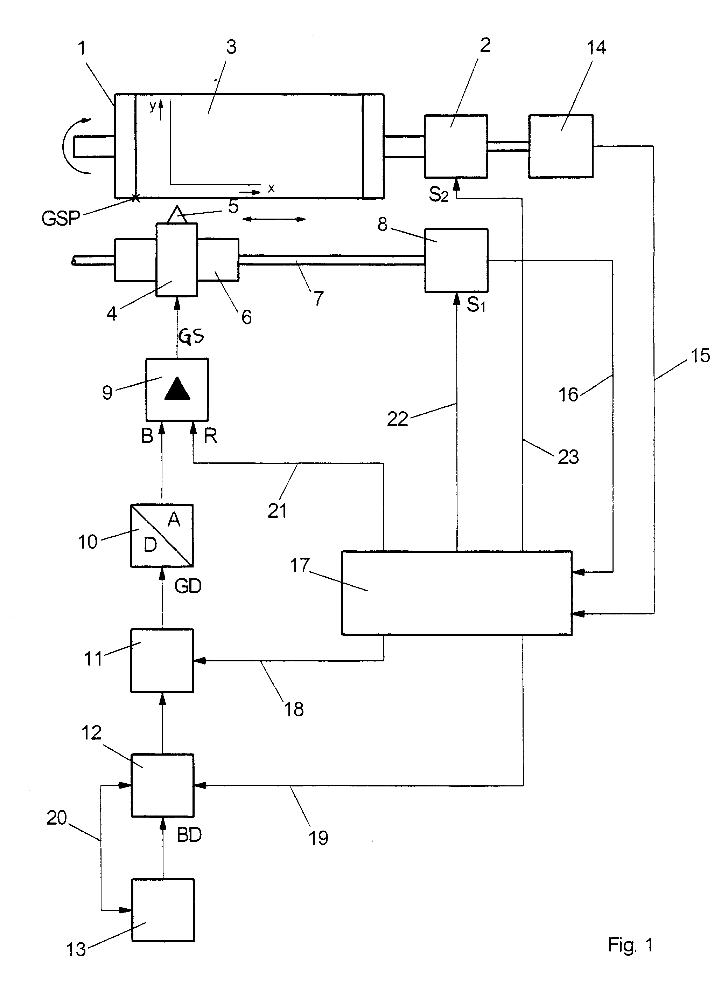

Fig. 1     zeigt ein prinzipielles Blockschaltbild einer Graviermaschine zur Gravur von Druckzylindern für den Tiefdruck. Die Graviermaschine ist beispielsweise ein HelioKlischograph® der Firma Hell Gravure Systems GmbH, Kiel, DE.

Ein Druckzylinder (1) wird von einem Zylinderantrieb (2) rotatorisch angetrieben. Die Gravur einer Druckseite (3) auf dem Druckzylinder (1) erfolgt mittels eines Gravierorgans (4), das beispielsweise als elektromagnetisches Gravierorgan mit einem Gravierstichel (5) als Schneidwerkzeug ausgebildet ist.

Im dargestellten Ausführungsbeispiel befindet sich das Gravierorgan (4) auf einem Gravierwagen (6), der über eine Spindel (7) von einem Gravierwagenantrieb (8) in Achsrichtung des Druckzylinders (1) bewegbar ist. Das Gravierorgan (4) kann auch mittels einer Spindelmutter an die rotierende Spindel (7) gekoppelt werden. In diesem Fall entfällt der Gravierwagen (6).

Der Gravierstichel (5) des Gravierorgans (4) schneidet Gravierlinie für Gravierlinie eine Folge von in einem Gravurraster angeordneten Näpfchen in die Mantelfläche des rotierenden Druckzylinders (1), während sich der Gravierwagen (6) mit den Gravierorganen (4) in Vorschubrichtung an dem Druckzylinder (1) entlang bewegt.

Die Gravur der Näpfchen erfolgt bei dem dargestellten Ausführungsbeispiel auf einzelnen, kreisförmig in Umfangsrichtung um den Druckzylinder (1) verlaufenden Gravierlinien, wobei der Gravierwagen (6) jeweils nach der Gravur der Näpfchen einer Gravierlinie einen axialen Vorschubschritt zur nächsten Gravierlinie ausführt. Der Gravierbeginn auf der ersten Gravierlinie ist durch einen Gravierstartpunkt (GSP) markiert.

Ein derartiges Gravierverfahren ist beispielsweise in der US-PS 4,013,829 beschrieben. Alternativ kann die Gravur auch in einer helixförmig um den Druckzylinder (1) verlaufenden Gravierlinie erfolgen, wobei der Gravierwagen (6) dann während der Gravur eine kontinuierliche Vorschubbewegung ausführt.

Der Gravierstichel (5) des Gravierorgans (4) wird durch ein Graviersteuersignal (GS) gesteuert. Das Graviersteuersignal (GS) wird in einem Gravierverstärkern (9) durch Überlagerung eines periodischen Rastersignals (R) mit Bildsignalwerten (B) gebildet, welches die Tonwerte der zu gravierenden Näpfchen zwischen "Licht" (Weiß) und "Tiefe" (Schwarz) repräsentiert. Während das periodische Rastersignal (R) eine vibrierende Hubbewegung des Gravierstichels (5) zur Erzeugung des Gravurrasters bewirkt, bestimmen die Bildsignalwerte (B) entsprechend den zu gravierenden Tonwerten die jeweiligen geometrischen Abmessungen wie Eindringtiefe, Querdiagonale und Längsdiagonale der in die Mantelfläche des Druckzylinders (1) gravierten Näpfchen.

Das Gravurraster besteht aus gedachten Rasternetzlinien, die in Achsrichtung und in Umfangsrichtung des Druckzylinders (1) orientiert sind, wobei die in Umfangsrichtung verlaufenden Rasternetzlinien die Gravierlinien sind. Die Schnittpunkte der Rasternetzlinien sind die Gravierorte ($P_G$) auf dem Druckzylinder (1) für die zu gravierenden Näpfchen. Jeder Gravierort ($P_G$) im Gravurraster ist durch ein Ortskoordinatenpaar (x, y) eines dem Druckzylinder (1) zugeordneten XY-Koordinatensystem definiert, dessen X-Achse in Achsrichtung (Vorschubrichtung) und dessen Y-Achse in Umfangsrichtung (Gravierlinienrichtung) ausgerichtet sind.

Die Geometrie des Gravurrasters bezüglich Rasterwinkel und Rasterweite wird durch die Frequenz des Rastersignals (R), durch die Umfangsgeschwindigkeit des Druckzylinders (1) und durch die axiale Vorschubschrittweite des Gravierorgans (4) bestimmt.

Das analoge Bildsignal (B) wird in einem D/A-Wandler (10) aus Gravurdaten (GD) gewonnen, die in einem Gravurdatenspeicher (11) zwischengespeichert sind und aus diesem Gravierlinie für Gravierlinie ausgelesen und dem D/A-Wandler (10) zugeführt werden. Dabei ist jedem Gravierort für ein Näpfchen im Gravurraster ein Gravurdatum von mindestens einem Byte zugeordnet, welches unter anderem als Gravierinformation den zu gravierenden Tonwert zwischen "Licht" und "Tiefe" enthält.

Die zur Gravur der Druckseite (3) benötigten Gravurdaten (GD) werden im Ausführungsbeispiel online während der Gravur durch Umrechnung von Bilddaten (BD), die in einer vom Gravurraster unabhängigen Originalauflösung vorliegen, in die Gravurdaten (GD) des aktuellen Gravurrasters mittels einer Interpolationsrechnung in einem Rasterrechner (12) gewonnen. Die Bilddaten (BD), die Bild- und Textinformation enthalten, sind in Form einer adressierbaren Bilddatendatei in einem Bilddatenspeicher (13) abgelegt. Die Bilddaten (BD) der zu gravierenden Druckseite werden beispielsweise durch punkt- und zeilenweise, optoelektronische Abtastung von Einzelvorlagen in einem Scanner und durch anschließende elektronische Montage der Einzelvorlagen zu der Druckseite gewonnen.

Der Gravurdatenspeicher (11) ist als Wechselspeicher mit zwei Speicherbereichen organisiert. Während aus dem einen Speicherbereich die Gravurdaten (GD) einer aktuell zu gravierenden Gravierlinie ausgelesen werden, werden in den anderen Speicherbereich die in dem Rasterrechner (12) interpolierten Gravurdaten (GD) der nachfolgend zu gravierenden Gravierlinie eingeschrieben. Die x-Ortskoordinaten der Gravierorte ($P_G$) im Gravurraster, welche die axialen Positionen des Gravierstichels (5) des Gravierorgans (4) in bezug auf den Druckzylinder (1) definieren, werden von dem Gravierwagenantrieb (8) erzeugt. Ein mit dem Zylinderantrieb (2) mechanisch gekoppelter Positionsgeber (14) erzeugt die entsprechende y-Ortskoordinaten, welche die relativen Umfangspositionen des rotierenden Druckzylinders (1) gegenüber dem Gravierstichel (5) des Gravierorgans (4) definieren. Die Ortskoordinaten (x, y) der Gravierorte ($P_G$) werden über Leitungen (15, 16) einem Steuerwerk (17) zugeführt.

Das Steuerwerk (17) steuert den Gravurdatenspeicher (11), den Rasterrechner (12) und den Bilddatenspeicher (13) bei der Erzeugung der Gravurdaten (GD) aus den Bilddaten (BD) in Abhängigkeit von den Ortskoordinaten (x, y) der Gravierorte ($P_G$) auf der jeweils aktuellen Gravierlinie.

In dem Steuerwerk (17) werden aus den Ortskoordinaten (x, y) die Adressen zur Adressierung des Gravurdatenspeichers (11) sowie eine Schreibtaktfolge und eine Lesetaktfolge erzeugt, mit denen die Gravurdaten (GD) in den Gravurdatenspeicher (11) eingeschrieben und aus diesen wieder ausgelesen werden. Adressen, Schreibtaktfolge und Lesetaktfolge werden dem Gravurdatenspeicher (11) über eine Mehrfachleitung (18) zugeführt.

Die Ortskoordinaten (x, y) der Gravierorte ($P_G$) auf den aktuell zu gravierenden Gravierlinien und entsprechende Steuersignale werden außerdem über eine Mehrfachleitung (19) an den Rasterrechner (12) gegeben. In dem Rasterrechner (12) werden jeweils aus den Ortskoordinaten (x, y) der Gravierorte ($P_G$) auf der aktuellen Gravierlinie die Ortskoordinaten (x, y) der Gravierorte ($P_G$) auf der nachfolgend zu gravierenden Gravierlinie berechnet und dann die ortsmäßig zugehörigen Gravurdaten (GD) für diese Gravierorte ($P_G$) aus den entsprechenden Bilddaten (BD) interpoliert.

Die zur Interpolation benötigten Bilddaten (BD) werden in dem Bilddatenspeicher (13) von dem Rasterrechner (12) aus adressiert, mittels einer Lesetaktfolge aus dem Bilddatenspeicher (13) ausgelesen und dem Rasterrechner (12) zugeführt. Rasterrechner (12) und Bilddatenspeicher (13) stehen dazu über eine Mehrfachleitung (20) in Wirkverbindung.

Das Steuerwerk (17) erzeugt außerdem in Abhängigkeit von dem jeweiligen Gravurraster das Rastersignal (R) auf einer Leitung (21) mit der für das Gravurraster relevanten Frequenz, einen Steuerbefehl ($S_1$) auf einer Leitung (22) an den Gravierwagenantriebs (8) zur Einstellung der für das Gravurraster relevanten Vorschubschrittweite und zur Steuerung des schrittweisen Vorschubs des Gravierorgans (4) während der Gravur sowie einen Steuerbefehl ($S_2$) auf einer Leitung (23) an den Zylinderantrieb (2) zur Einstellung der für das Gravurraster relevanten Umfangsgeschwindigkeit des Druckzylinders (1).

Für den Vierfarbendruck der Druckseite (3) werden vier Druckzylinder (1) mit bezüglich Rasterwinkel und Rasterweite unterschiedlichen Gravurrastern für die einzelnen Druckfarben "Gelb", "Magenta", "Cyan" und "Schwarz" eines Farbsatzes graviert. Beispielsweise sind in der EP-PS 0 056 829 bevorzugte Gravurraster für die vier Druckfarben eines Farbsatzes angegeben, mit denen sich störende Moiré-Muster und störendes Farbspiel beim Zusammendruck verringern lassen.

Zur Minimierung eines unerwünschten Streifenmoirés beim Zusammendruck der Druckformen in der Druckmaschine wird erfindungsgemäß unabhängig von der Druckfarbe mindestens ein Gravurraster gegenüber den anderen Gravurrastern eines Farbsatzes auf dem Druckzylinder (1) in Vorschubrichtung und/oder Umfangsrichtung versetzt graviert, wodurch eine Verschiebung des Gravurrasters gegenüber der zu gravierenden Bildinformation erreicht wird. Dabei wird der Rasterversatz empirisch derart gewählt, daß Streifenmoirés jedenfalls dann weitestgehend unterdrückt werden, wenn der Zusammendruck passergenau im Register erfolgt. In zweckmäßiger Weise sollte der Rasterversatz in Schritten von beispielsweise 1/32 des Näpfchenabstandes bzw. der Querdiagonalen wählbar sein. Beispielsweise kann eine optimale Minimierung des Streifenmoirés bei einem Rasterversatz von ⅛ des Näpfchenabstandes bzw. der Querdiagonalen erzielt werden, was je nach Gravurraster einem Rasterversatz von 40 µm bis 60 µm bei einer Querdiagonalen von 160 µm bis 240 µm entspricht.

Zur erfindungsgemäßen Gravur eines lagemäßig verschobenen Gravurrasters auf dem Druckzylinder (1) wird der ursprünglich für alle Gravurraster eines Farbsatzes vorgesehene Gravierstartpunkt (GSP) auf dem Druckzylinder (1) um einen Startvektor (SV) mit einer Startvektorkomponente ($SV_x$) in X-Richtung (Achsrichtung) und/oder einer Startvektorkomponente ($SV_y$) in Y-Richtung (Umfangsrichtung) verschoben.

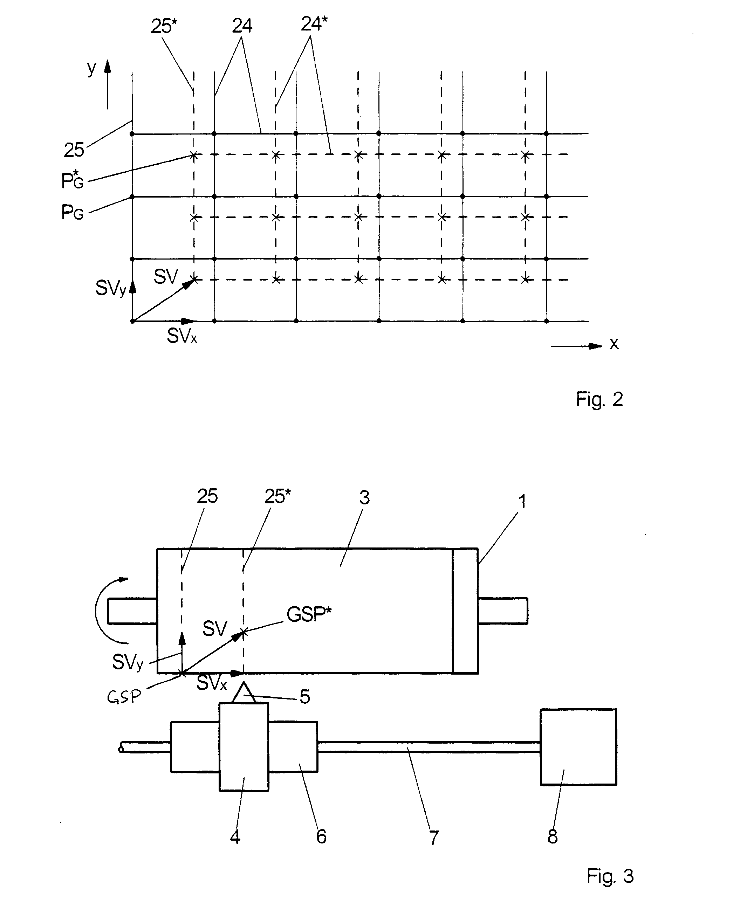

Fig. 2    zeigt das ursprüngliche Gravurraster (24) einer der vier Druckfarben eines Farbsatzes und das um einen Startvektor (SV) mit den Startvektorkomponenten ($SV_x$, $SV_y$) versetzte Gravurraster (24*), in dem die Gravierlinien (25*) und die Gravierorte ($P^*_G$) auf den Gravierlinien gegenüber dem ursprünglichen Gravurraster (24) entsprechen verschoben sind.

Vor der Gravur des lagemäßig versetzen Gravurrasters (24*) wird das Gravierorgan (4) um die Startvektorkomponente ($SV_x$) in X-Richtung versetzt, wobei die Vorschubbewegung des Gravierorgans (4) bei Gravierbeginn von der versetzten Axialposition aus beginnt.

Falls auch ein Versatz des Gravurrasters (24) in Y-Richtung erfolgen soll, wird im Steuerwerk (17) der zeitliche Gravierbeginn in jeder Gravierlinie verzögert, indem die Lesetaktfolge zum Auslesen der Gravurdaten (GD) aus dem Gravurdatenspeicher (11) um ein Zeitintervall verzögert wird, das der Startvektorkomponente ($SV_y$) entspricht.

Fig. 3    zeigt den Druckzylinder (1) und das Gravierorgan (4), das vor Gravierbeginn von dem ursprünglichen Gravierstartpunkt (GSP) um die axiale Startvektorkomponente ($SV_x$) auf eine Axialposition verschoben wurde, von der die Gravur der ersten Gravierlinie (25*) des versetzten Gravurrasters (24*) und die Vorschubbewegung des Gravierorgans (4) beginnt. Durch eine der umfangsmäßigen Startvektorkomponente ($SV_y$) entsprechenden Zeitverzögerung beginnt die Gravur auf der ersten Gravierlinie (25*) und jeder folgenden Gravierlinie jeweils in dem versetzten Gravierstartpunkt (GSP*).

Die den um den Startvektor (SV) verschobenen Gravierorten ($P_G^*$) des versetzten Gravurrasters (24*) ortsmäßig zugeordneten Gravurdaten (GD) werden erfindungsgemäß durch eine die jeweilige Lageverschiebung der Gravierorte ($P_G^*$) berücksichtigende Interpolationsrechnung aus den in der Originalauflösung vorliegenden Bilddaten (BD) gewonnen. Die Interpolationsrechnung unter Berücksichtigung des Startvektors (SV) erfolgt in vorteilhafter Weise nach der DE-PS 43 35 214, die nachfolgend näher erläutert wird.

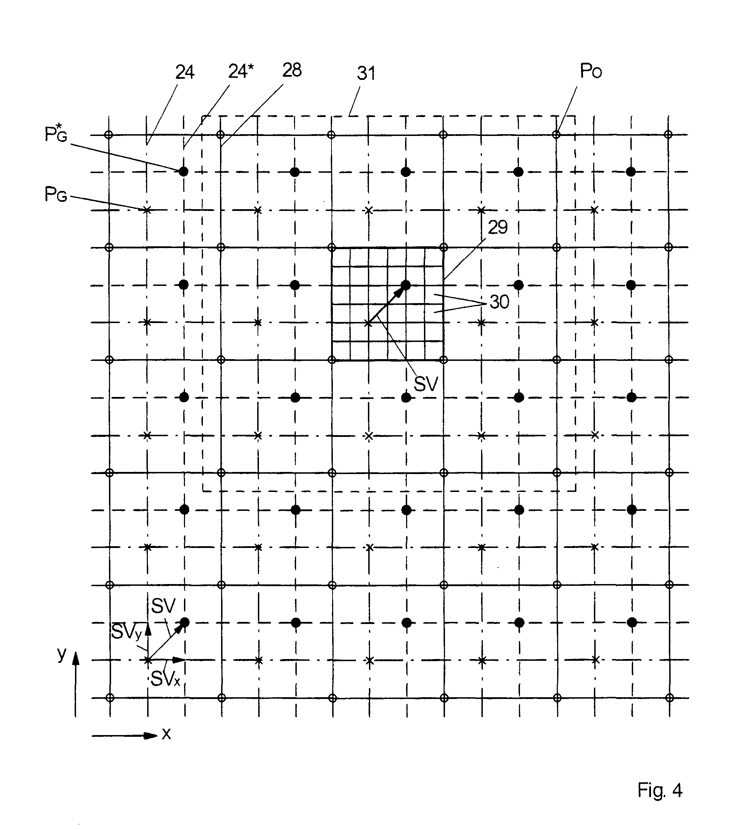

Fig. 4    zeigt ausschnittsweise ein Originalraster (28) mit Bildpunkten ($P_o$) in den Schnittpunkten der Rasternetzlinien des Originalrasters (28). Die Figur zeigt außerdem das Gravurraster (24) für eine Druckfarbe eines Farbsatzes mit Gravierorten ($P_G$) in den Schnittpunkten der Rasternetzlinien und das um einen Startvektor (SV) versetzte Gravurraster (24*) mit den entsprechend versetzten Gravierorten ($P_G^*$).

Die drei Raster (28, 24, 24*) sind in Umfangsrichtung (Y-Richtung) des Druckzylinders (1) und in Vorschubrichtung (X-Richtung) des Gravierorgans (4) orientiert. Die in Y-Richtung verlaufenden Rasternetzlinien der Gravurraster (24, 24*) bilden die parallel zueinander verlaufenden Gravierlinien, deren Abstände voneinander jeweils einem Vorschubschritt des Gravierorgans (4) entsprechen.

In dem Originalraster (28) ist ein Klassenfeld (29) definiert. Das Klassenfeld (29) ist in Teilfelder (30) unterteilt, welchen Interpolationsklassen zugeordnet sind. Das Klassenfeld (29) hat die Größe einer Rastermasche des Originalrasters (28). Um das Klassenfeld (29) ist ein Interpolationsfenster (31) definiert, dessen Größe von dem Gravurraster abhängt. Das Interpolationsfenster (31) umfaßt jeweils so viele Bildpunkte ($P_O$) des Originalrasters (28) wie Bilddaten (BD) an der Interpolation des Gravurdatums (GD) eines Gravierortes ($P_G$, $P_G$*) beteiligt werden sollen.

Vor der Interpolation wird für jedes Teilfeld (30) des Klassenfeldes (29) die zugehörige Interpolationsklasse als Satz von Gewichtungskoeffizienten (k) ermittelt, deren Anzahl der Anzahl von Bildpunkten ($P_O$) innerhalb des Interpolationsfensters (31) entspricht. Dazu werden für jedes Teilfeld (30) die Abstände zu den einzelnen Bildpunkten ($P_O$) innerhalb des Interpolationsfensters (31) festgestellt und für jeden Bildpunkt ($P_O$) innerhalb des Interpolationsfensters (31) ein dem festgestellten Abstand entsprechender Gewichtungskoeffizient (k) aus einer zweidimensionalen Gewichtungsfunktion berechnet. Die für die Teilfelder (30) berechneten Sätze von Gewichtungskoeffizienten (k) werden abrufbar gespeichert.

Bei der Online-Interpolation der Gravurdaten (GD, GD*) wird das Interpolationsfenster (31) mit dem Klassenfeld (30) über das Originalraster (28) verschoben, bis jeweils ein Gravierort ($P_G$, $P_G$*) innerhalb des verschobenen Klassenfeldes (29) liegt. Die Verschiebung des Interpolationsfensters (31) wird durch die Ortskoordinaten (x, y) des dem Druckzylinder (1) zugeordneten XY-Koordinatensystems gesteuert.

Wenn ein Gravierort ($P_G$, $P_G$*) innerhalb des verschobenen Klassenfeldes (29) liegt, wird dasjenige Teilfeld (30) des Klassenfeldes (29) ermittelt, in das der betreffende Gravierort ($P_G$, $P_G$*) fällt, sowie der Satz von Gewichtungskoeffizienten (k, k*) derjenigen Interpolationsklasse aufgerufen, die dem ermittelten Teilfeld (30) zugeordnet ist. Abschließend wird dann das Gravurdatum (GD, GD*) für den aktuellen Gravierort ($P_G$, $P_G$*) mittels des aufgerufenen Satzes von Gewichtungskoeffizienten (k, k*) berechnet, indem jeweils die Bilddaten (BD) der innerhalb des Interpolationsfensters (31) liegenden Bildpunkte ($P_O$) mit den aufgerufenen Gewichtungskoeffizienten (k, k*) gewichtet und die gewichteten Bilddaten (BD) addiert werden, um das interpolierte Gravurdatum (GD, GD*) eines Gravierortes ($P_G$, $P_G$*) gemäß der nachfolgenden Gleichungen zu erhalten.

$$GD = k_1 \times BD_1 + k_2 \times BD_2 + k_3 \times BD_3 + ...... + k_n \times BD_n \qquad \text{bzw.}$$

$$GD^* = k_1^* \times BD_1 + k_2^* \times BD_2 + k_3^* \times BD_3 + ...... + k_n^* \times BD_n$$

Aus der Fig. 4 und den obigen Gleichungen ist ersichtlich, daß die neuen Gravurdaten (GD*) für die um den jeweiligen Startvektor (SV) verschobenen Gravierorte ($P_G$*) bei der Interpolation aus den Bilddaten (BD) auf einfache Weise durch entsprechend der Ortsverschiebung der Gravierorte ($P_G$*) geänderte Gewichtungskoeffizienten (k*) gewonnen werden können. Dabei werden die neuen Gravurdaten (GD*) des versetzten Gravurrasters (24*) gegenüber den Gravurdaten (GD) des nicht versetzten Gravurrasters (24)derart abgeändert, daß die Lage des gravierten Bildinhalts auf dem Druckzylinder (1) trotz der Rasterverschiebung erhalten bleibt.

In der Praxis werden außer der Bildinformation auch noch Kontroll- und Steuerzeichen auf dem Druckzylinder graviert, welche bei der Registerregelung und bei der optischen Passerkontrolle benutzt werden. Es ist selbstverständlich, daß das Gravurraster zur Erzeugung dieser Kontroll- und Steuerzeichen entsprechend dem Gravurraster zur Erzeugung der Bildinformation verschoben werden muß.

Die Erfindung ist nicht auf das beschriebene Ausführungsbeispiel beschränkt.

Versetzte Gravurraster können sowohl bei der Gravur von gerasterten Druckzylindern als auch von gerasterten Flachdruckformen für den Verpackungs- und Magazintiefdruck angewendet werden.

Anstelle eine Interpolation während der Gravur können die interpolierten Gravurdaten (GD) bereits vor der Gravur erzeugt und in dem Gravurdatenspeicher (11) abgespeichert werden.

Das erfindungsgemäße Verfahren ist auch dann anwendbar, wenn die Gravurdaten (GD) durch eine punkt - und zeilenweise Abtastung einer Druckvorlage während der Gravur des versetzten Gravurrasters (24*) gewonnen werden. In diesem Fall beginnt die Vorlagenabtastung auf einem Abtaststartpunkt in der Druckvorlage, der dem bei der Gravur eins nicht versetzten Gravurrasters(24) entsprechen würde, während die Gravur des versetzten Gravurrasters (24*) auf dem um den Startvektor (VS) verschobenen Gravierstartpunkt (GSP*) beginnen würde.

Das erfindungsgemäße Verfahren ist sowohl bei der Gravur von kreisförmigen Gravierlinien mit schrittweisem Vorschub des Gravierorgans (4) als auch bei der Gravur einer helixförmigen Gravierlinie mit kontinuierlichem Vorschub des Gravierorgans (4) anwendbar. Im Fall der Gravur einer helixförmigen Gravierlinie wird der Startvektor (SV) durch Vektorkomponenten korrigiert, die sich aus der Steigung der Helix ergeben.

**Patentansprüche**

1. Verfahren zur Gravur gerasterter Druckzylinder für den Tiefdruck mittels einer elektronischen Graviermaschine, bei dem

- durch Überlagerung eines Bildsignals (B), welches die zu gravierenden Tonwerte zwischen "Licht" (Weiß) und "Tiefe" (Schwarz) repräsentiert, mit einem periodischen Rastersignal (R) zur Erzeugung eines Gravurrasters ein Graviersteuersignal (GS) zur Ansteuerung eines Gravierorgans (4) erzeugt wird,
- das Gravierorgan (4) in einen rotierenden Druckzylinder (1) gravierlinienweise eine Folge in dem Gravurraster angeordneter Näpfchen mit den zu reproduzierenden Tonwerten entsprechenden Gravurtiefen graviert,
- das Gravierorgan (4) zur flächenhaften Gravur der Näpfchen eine in Achsrichtung des Druckzylinders (1) gerichtete Vorschubbewegung am Druckzylinder (1) entlang ausführt und
- jeder Druckfarbe eines Farbsatzes ein eigenes Gravurraster zugeordnet wird, das so gewählt ist, daß die beim Zusammendruck mit den anderen Druckfarben auftretenden Moire-Effekte minimiert werden, **dadurch gekennzeichnet, daß** zur weiteren Minimierung störender Moirés mindestens ein Gravurraster (24) gegenüber den anderen Gravurrastern eines Farbsatzes auf dem Druckzylinder (1) versetzt graviert wird.

2. Verfahren nach Anspruch 1, **dadurch gekennzeichnet, daß** das Gravurraster (24) in Vorschubrichtung des Gravierorgans (4) und/oder in Umfangsrichtung des Druckzylinders (1) versetzt graviert wird.

3. Verfahren nach Anspruch 1 oder 2, **dadurch gekennzeichnet, daß** der Versatz des Gravurrasters (24*) von einem Bezugspunkt des ursprünglichen Gravurrasters (24) durch einen Startvektor (SV) vorgegeben wird.

4. Verfahren nach Anspruch 3, **dadurch gekennzeichnet, daß**

- der Bezugspunkt der Gravierstartpunkt (GSP) zur Gravur des ursprünglichen Gravurrasters (24) ist und
- der Gravierstartpunkt (GSP*) zur Gravur des versetzten Gravurrasters (24*) um den Startvektor (SV) verschoben wird.

5. Verfahren nach Anspruch 4, **dadurch gekennzeichnet, daß**

- das Gravierorgan (4) vor der Gravur des versetzten Gravurrasters (24*) von dem Gravierstartpunkt (GSP) für die Gravur des ursprünglichen Gravurrasters (24) um die Vektorkomponente ($SV_x$) des Startvektors (SV) in Achsrichtung des Druckzylinders (1) auf eine axiale Startposition verschoben wird und
- die Vorschubbewegung des Gravierorgans (4) zur Gravur des versetzten Gravurrasters (24*) in der axialen Startposition beginnt.

6. Verfahren nach einem der Ansprüche 3 bis 5, **dadurch gekennzeichnet, daß** der Gravierbeginn zur Gravur des versetzten Gravurrasters (24*) um die Vektorkomponente ($SV_y$) des Startvektors (SV) in Umfangsrichtung des Druckzylinders (1) verzögert wird.

7. Verfahren nach einem der Ansprüche 1 bis 6, **dadurch gekennzeichnet, daß** die Geometrie des Gravurrasters (24) durch die Frequenz des Rastersignals (R), durch die Umfangsgeschwindigkeit des Druckzylinders (1) und durch die Vorschubbewegung des Gravierorgans (4) bestimmt wird.

8. Verfahren nach einem der Ansprüche 1 bis 7, **dadurch gekennzeichnet, daß**

- das Gravierorgan (4) auf einem Gravierwagen (6) verschiebbar und arretierbar angeordnet ist und
- der Gravierwagen (6) mit dem arretierten Gravierorgan (4) bei der Gravur die Vorschubbewegung am Druckzylinder (1) entlang ausführt.

9. Verfahren nach Anspuch 8, **dadurch gekennzeichnet, daß**

- die Näpfchen auf kreisförmig um den Druckzylinder (1) verlaufenden Gravierlinien graviert werden und
- das Gravierorgan (4) bzw. der Gravierwagen (6) jeweils nach der Gravur einer Gravierlinie einen dem Gravierlinienabstand entsprechenden Vorschubschritt ausführt.

10. Verfahren nach einem der Ansprüche 3 bis 9, **dadurch gekennzeichnet, daß** die den Gravierorten ($P_G^*$) des versetzten Gravurrasters (24*) ortsmäßig zugehörigen Gravurdaten (GD*) durch eine den Startvektor (SV) berücksichtigende Interpolation aus Bilddaten (BD) gewonnen werden, die in einem von dem Gravurraster (24*) unabhängigen Originalraster (28) vorliegen.

**11.** Verfahren nach Anspruch 10, <u>**dadurch gekennzeichnet, daß**</u> die Bilddaten (BD) durch optoelektronische punkt- und zeilenweise Abtastung von Vorlagen gewonnen werden.

**12.** Verfahren nach einem der Ansprüche 10 bis 11, <u>**dadurch gekennzeichnet, daß**</u> die Interpolation on-line bei der Gravur durchgeführt wird.

**13.** Verfahren nach einem der Ansprüche 10 bis 12, <u>**dadurch gekennzeichnet, daß**</u>

- die Bilddaten (BD) in einem Originalraster (28) vorliegen,
- ein Klassenfeld (29) von der Größe einer Rastermasche des Originalrasters (28) festgelegt und das Klassenfeld (29) in Interpolationsklassen darstellende Teilfelder (30) unterteilt wird,
- für die einzelnen Interpolationsklassen Gewichtungskoeffizienten (k) abrufbar gespeichert werden,
- um das Klassenfeld (29) ein Interpolationsfenster (31) festgelegt wird, das jeweils so viele Bilddaten (BD) umfaßt wie an der Berechnung eines Gravurdatums (GD*) des versetzten Gravurrasters (24*) beteiligt sind,
- das Klassenfeld (29) mit dem Interpolationsfenster (31) bei der Gravur synchron mit der Vorschubbewegung des Gravierorgans (4) und der Drehbewegung des Druckzylinders (1) über das Originalraster (28) verschoben wird, bis ein Gravierort (PG*) des versetzten Gravurrasters (24*) innerhalb des verschobenen Klassenfeldes (29) liegt,
- das Teilfeld (30), in dem der Gravierort ($P_G$*) des versetzten Gravurrasters (24*) fällt, festgestellt wird,
- die Gewichtungskoeffizienten (k*) der dem festgestellten Teilfeld (30) zuvor zugeordneten Interpolationsklasse aufgerufen werden und
- das Gravurdatum (GD*) des Gravierortes (PG*) mit Hilfe der aufgerufenen Gewichtungskoeffizienten (k*) aus den im Interpolationsfenster (31) liegenden Bilddaten (BD) berechnet wird.

## Claims

**1.** Method for engraving screened printing cylinders for intaglio printing by means of an electronic engraving machine, in which

- an engraving control signal (GS) to drive an engraving head (4) is generated by superimposing a periodic screen signal (R) for generation of an engraving screen on a video signal (B) representing the tonal values between "highlight" (white) and "shadow" (black) to be engraved,
- the engraving head (4) engraves in a rotating printing cylinder (1), line by line, a series of cells arranged in the engraving screen, with the engraving depths corresponding to the tonal values to be reproduced,
- for area engraving of cells, the engraving head (4) executes an advance motion along the printing cylinder (1) in the axial direction of the printing cylinder (1) and
- an individual engraving screen is assigned to each print colour of a colour set and is selected so as to minimize moiré effects occurring in combination with the other printing colours, **characterized in that**, for further minimization of intrusive moirés, at least one engraving screen (24) is engraved on the printing cylinder (1) with an offset from the other engraving screens of a colour set.

**2.** Method according to Claim 1, **characterized in that** the engraving screen (24) is engraved with offset in the advance direction of the engraving head (4) and/or in the circumferential direction of the printing cylinder (1).

**3.** Method according to Claim 1 or 2, **characterized in that** the offset of the engraving screen (24*) from a datum point of the original engraving screen (24) is specified by a start vector (SV).

**4.** Method according to Claim 3, **characterized in that**

- the datum point is the engraving-start point (GSP) for engraving the original engraving screen (24) and
- the engraving-start point (GSP*) for engraving the offset engraving screen (24*) is displaced by the start vector (SV).

5. Method according to Claim 4, **characterized in that**

- prior to the engraving of the offset engraving screen (24*), the engraving head (4) is shifted in the axial direction of the printing cylinder (1) from the engraving-start point (GSP) for engraving the original engraving screen (24) by the vector component (SVx) of the start vector (SV) to an axial start position, and
- the advance motion of the engraving head (4) to engrave the offset engraving screen (24*) commences at the axial start position.

6. Method according to any one of Claims 3 to 5, **characterized in that** the start of engraving the offset engraving screen (24*) is retarded by the vector component (SVy) of the start vector (SV) in the circumferential direction of the printing cylinder (1).

7. Method according to any one of Claims 1 to 6, **characterized in that** the geometry of the engraving screen (24) is determined by the frequency of the screen signal (R), by the circumferential speed of the printing cylinder (1) and by the advance motion of the engraving head (4).

8. Method according to any one of Claims 1 to 7, **characterized in that**

- the engraving head (4) is arranged shiftably and lockably on an engraving carriage (6) and
- the engraving carriage (6) with the engraving head (4) locked in position executes the advance motion along the printing cylinder (1) as engraving proceeds.

9. Method according to Claim 8, **characterized in that**

- the cells are engraved on engraving lines running in circles around the printing cylinder (1) and
- after engraving each engraving line, the engraving head (4) and/or carriage (6) executes a step advance equal to the spacing between engraving lines.

10. Method according to any one of Claims 3 to 9, **characterized in that** the gravure data (GD*) spatially relating to the engraving spots (PG*) of the offset engraving screen (24*) are obtained by an interpolation, taking account of the start vector (SV), from image data (BD) presented in an original screen (28) independent of the engraving screen (24*).

11. Method according to Claim 10, **characterized in that** the image data (BD) are obtained by optoelectronic point- and line-scanning of originals.

12. Method according to Claim 10 or 11, **characterized in that** the interpolation is carried out on-line during engraving.

13. Method according to any one of Claims 10 to 12, **characterized in that**

- the image data (BD) are presented in an original screen (28),
- a class field (29) of the same size as a mesh of the original screen (28) is defined, and the class field (29) is divided into part-fields (30) representing interpolation classes,
- weighting coefficients (k) are retrievably stored for the individual interpolation classes,
- an interpolation window (31) containing as many image data (BD) as are involved in the calculation of a gravure datum (GD*) of the offset engraving screen (24) is established around the class field (29),
- during engraving, the class field (29) with the interpolation window (31) is displaced over the original screen (28) in synchronization with the advance motion of the engraving head (4) and with the rotary motion of the printing cylinder (1), until an engraving spot (PG*) of the offset engraving screen (24*) lies within the displaced class field (29),
- the part-field (30) in which the engraving spot (PG*) of the offset engraving screen (24*) falls is identified,
- the weighting coefficients (k*) of the interpolation class previously assigned to the identified part-field (30) are called up and
- the gravure datum (GD*) of the engraving spot (PG*) is calculated with the aid of the called-up weighting coefficients (k*) from the image data (BD) lying in the interpolation window (31).

**Revendications**

1. Procédé de gravure de forme d'impression tramée pour l'impression en taille douce à l'aide d'une machine de gravure électronique selon lequel

   - par la combinaison d'un signal d'image (B) représentant la valeur de teinte à graver entre « lumière » (blanc) et « profondeur » (noir) et d\in signal de trame (R) périodique pour générer une trame de gravure, on forme un signal de commande de gravure (GS) destiné à commander un organe de gravure (4),
   - l'organe de gravure (4) assure la gravure dans un cylindre d'impression (1) rotatif, suivant une ligne de gravure, en réalisant une succession de cuvettes réparties suivant la trame de gravure et ayant une profondeur de gravure correspondant à la valeur de teinte à reproduire,
   - l'organe de gravure (4) effectue un mouvement d'avancée dirigé suivant l'axe du cylindre d'impression (1), le long du cylindre d'impression (1) pour effectuer une gravure de la surface de la cuvette, et
   - chaque couleur d'impression d'un jeu de couleurs est associée à sa propre trame de gravure choisie pour que lors de l'impression combinée avec d'autres teintes d'impression réduit au minimum l'effet de moiré,

   **caractérisé en ce que**
   pour réduire encore au minimum l'effet de moiré, perturbateur, on grave de manière décalée au moins une trame de gravure (24) par rapport aux autres trames de gravure d'un jeu de couleurs sur le cylindre d'impression (1).

2. Procédé selon la revendication 1,
   **caractérisé en ce que**
   la trame de gravure (24) est gravée de manière décalée dans la direction d'avancement de l'organe de gravure (4) et/ou dans la direction périphérique du cylindre d'impression (1).

3. Procédé selon l'une quelconque des revendications 1 ou 2,
   **caractérisé en ce que**
   le décalage de la trame de gravure (24*) par rapport à un point de référence de la trame de gravure d'origine (24) est prédéfini par un vecteur de départ (SV).

4. Procédé selon la revendication 3,
   **caractérisé en ce que**

   - le point de référence est le point de départ de gravure (GSP) pour graver la trame de gravure d'origine (24) et
   - le point de départ de gravure (GSP*) pour graver la trame de gravure décalée (24*) est décalé selon le vecteur de départ (SV).

5. Procédé selon la revendication 3,
   **caractérisé en ce que**

   - l'organe de gravure (4) est décalé avant la gravure de la trame de gravure décalée (24*) par rapport au point de départ de gravure (GSP) pour graver la trame de gravure d'origine (24), de la composante vectorielle ($SV_x$) du vecteur de départ (SV) dans la direction axiale du cylindre d'impression (1) par rapport à la position de départ axiale et
   - le mouvement d'avance de l'organe de gravure (4) pour graver la trame de gravure décalée (24*) commence à la position de départ axiale.

6. Procédé selon l'une quelconque des revendications 3 à 5,
   **caractérisé en ce que**
   le début de la gravure de la trame de gravure décalée (24*) est retardé de la composante vectorielle ($SV_y$) du vecteur de départ (SV) dans la direction périphérique du cylindre d'impression (1).

7. Procédé selon l'une quelconque des revendications 1 à 6,
   **caractérisé en ce que**
   la géométrie de la trame de gravure (24) est déterminée par la fréquence du signal de trame (R), par la vitesse périphérique du cylindre d'impression (1) et par le mouvement d'avance de l'organe de gravure (4).

8. Procédé selon l'une quelconque des revendications 1 à 7,

**caractérisé en ce que**

- l'organe de gravure (4) coulissant sur un chariot de gravure (6) peut être bloqué et
- le chariot de gravure (6) avec l'organe de gravure (4), bloqué, pour la gravure, effectue le mouvement d'avance le long du cylindre d'impression (1).

9. Procédé selon la revendication 8,
   **caractérisé en ce que**

   - les cuvettes sont gravées suivant un tracé circulaire selon les lignes de gravure autour du cylindre d'impression (1) et
   - l'organe de gravure (4) ou le chariot de gravure (6) effectue, chaque fois après la gravure d'une ligne de gravure, un pas d'avance correspondant à l'intervalle entre les lignes de gravure.

10. Procédé selon l'une quelconque des revendications 3 à 9,
    **caractérisé en ce que**
    les données de gravure (GD*) associées localement aux emplacements de gravure ($P_G$*) de la trame de gravure décalée (24*) sont obtenues par une interpolation à partir des données d'image (BD) tenant compte du vecteur de départ (SV), ces données se trouvant dans une trame d'origine (28) indépendante de la trame de gravure (24*).

11. Procédé selon la revendication 10,
    **caractérisé en ce que**
    les données d'image (BD) sont obtenues par la détection optoélectronique point par point et ligne par ligne de modèles.

12. Procédé selon l'une quelconque des revendications 10 à 11,
    **caractérisé en ce que**
    l'interpolation se fait en ligne au moment de la gravure.

13. Procédé selon l'une quelconque des revendications 10 à 12,
    **caractérisé en ce que**

    - les données d'image (BD) se trouvent dans une trame d'origine (28),
    - un champ de classes (29) est fixé suivant la taille d'une maille de trame de la trame d'origine (28) et le champ de classe (29) est subdivisé en champs partiels (30) représentant des classes d'interpolation,
    - on mémorise de manière disponible des coefficients de pondération (k) pour les différentes classes d'interpolation,
    - on fixe une fenêtre d'interpolation (31) autour du champ de classes (29), cette fenêtre comprenant chaque fois autant de données d'image (BD) que celles nécessaires au calcul d'une donnée de gravure (GD*) de la trame de gravure décalée (24*),
    - on décale le champ de classes (29) avec la fenêtre d'interpolation (31) lors de la gravure, de manière synchrone avec le mouvement d'avance de l'organe de gravure (4) et le mouvement de rotation du cylindre d'impression (1) sur la trame d'origine (28) jusqu'à ce qu'un emplacement de gravure (PG*) de la trame de gravure décalée (24*) se situe à l'intérieur du champ de classes, décalé (29),
    - on détermine le champ partiel (30) dans lequel tombe l'emplacement de gravure ($P_G$*) de la trame de gravure décalée (24*),
    - on appelle les coefficients de pondération (k*) de la classe d'interpolation associée aux champs partiels (30) déterminés, et
    - on calcule la donnée de gravure (GD*) de l'emplacement de gravure (PG*) à l'aide des coefficients de pondération appelés (k*) à partir des données d'image (BD) situées dans la fenêtre d'interpolation (31).

Fig. 1

Fig. 2

Fig. 3

Fig. 4